Europäisches Patentamt

European Patent Office

Office européen des brevets

(11) Numéro de publication: 0 314 557
A2

# (12) DEMANDE DE BREVET EUROPEEN

(21) Numéro de dépôt: 88402673.3

(22) Date de dépôt: 24.10.88

(51) Int. Cl.⁴: **G 11 B 5/235**
**G 11 B 5/245, G 11 B 5/17,
G 11 B 5/187
// G11B5/31**

(30) Priorité: 27.10.87 FR 8714825

(43) Date de publication de la demande:
03.05.89 Bulletin 89/18

(84) Etats contractants désignés: **DE GB IT NL**

(71) Demandeur: **THOMSON-CSF
173, Boulevard Haussmann
F-75379 Paris Cédex 08 (FR)**

(72) Inventeur: **Mage, Jean-Claude
THOMSON-CSF SCPI 19, avenue de Messine
F-75008 Paris (FR)**

**Rolland, Jean-Luc
THOMSON-CSF SCPI 19, avenue de Messine
F-75008 Paris (FR)**

**Castera, Jean-Paul
THOMSON-CSF SCPI 19, avenue de Messine
F-75008 Paris (FR)**

(74) Mandataire: **Chaverneff, Vladimir et al
THOMSON-CSF SCPI
F-75008 PARIS LA DEFENSE CEDEX 67 (FR)**

(54) Tête magnétique d'enregistrement/lecture comportant un matériau supraconducteur.

(57) Tête magnétique dans laquelle on prévoit dans l'entrefer (2) un matériau supraconducteur présentant une perméabilité nulle et interdisant le passage du champ magnétique dans l'entrefer. Diverses variantes de réalisation permettent d'améliorer l'efficacité de la tête en canalisant le flux magnétique à l'extérieur de l'entrefer. Application : magnétophones - magnétoscopes.

FIG_3

EP 0 314 557 A2

## Description

### TETE MAGNETIQUE D'ENREGISTREMENT/LECTURE COMPORTANT UN MATERIAU SUPRACONDUCTEUR

La présente invention concerne une tête magnétique d'enregistrement/lecture comportant un matériau supraconducteur et notamment une tête magnétique dans laquelle un matériau supraconducteurest utilisé pour canaliser le flux magnétique émis par la tête vers le support d'enregistrement magnétique.

Pour mettre en évidence l'intérêt de l'invention on va tout d'abord décrire de manière générale les têtes magnétiques d'enregistrement/lecture existantes.

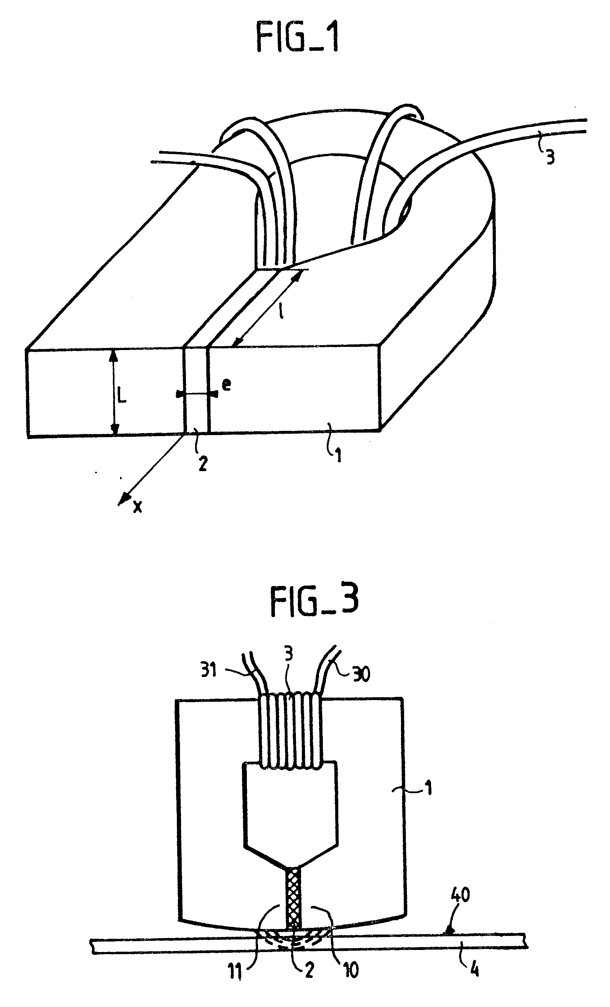

Les têtes magnétiques d'enregistrement/lecture sont constituées d'un circuit magnétique 1 à perméabilité élevée comportant un entrefer non magnétique 2 d'épaisseur e et d'un circuit électrique 3 qui entoure le circuit magnétique 1 (figure 1).

Lorsque le circuit 3 est parcouru par un courant, il émet un champ magnétique H qui est capté par le circuit 1 et concentré au niveau de l'entrefer 2 . Réciproquement, une variation locale de flux au niveau de l'entrefer 2 induit une tension V aux bornes du circuit 3.

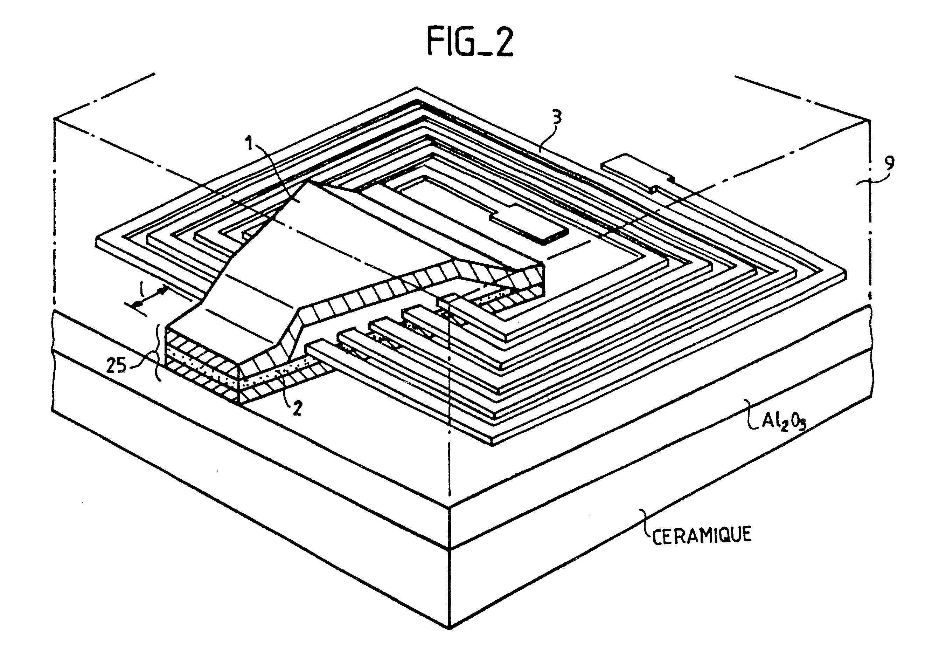

Les têtes actuelles peuvent être divisées en deux familles :
- les têtes massives réalisées par usinage et assemblage de demi-têtes en matériau magnétique (exemples : têtes audio en ferrite ou en métal magnétique, têtes vidéo familiales (VHS) en monocristal de ferrite). Le circuit 3 est bobiné après assemblage
- les têtes couches minces, telles que représentées en figure 2, réalisées par dépôts successifs de couches minces de matériaux magnétiques de diélectriques, et de pistes conductrices gravées de manière à réaliser les éléments 1, 2 et 3.

Chacune de ces familles peut être utilisée :
- soit pour l'enregistrement longitudinal, c'est à dire avec un milieu d'enregistrement dans lequel l'aimantation est parallèle au support et au défilement de la bande
- soit pour l'enregistrement perpendiculaire ou vertical, c'est à dire avec un milieu d'enregistrement dans lequel l'aimantation est perpendiculaire au support et au défilement de la bande.

Pour ce deuxième type d'enregistrement, il peut être préférable d'utiliser des têtes dans lesquelles le circuit magnétique 1 n'est pas refermé au niveau de l'entrefer 2 par deux pôles symétriques, l'un des pôles seulement jouant un rôle actif dans l'enregistrement. Il s'agit alors de tête à pôle principal ou à pôle unique (single pole).

Le critère principal pour caractériser une tête est le rapport signal/bruit qui doit être le plus grand possible.
- $\eta$ la valeur du signal est déterminée par l'efficacité (en écriture et par réciprocité en lecture)
$\eta = H(x) /Ho$
avec $H(x)$ = champ magnétique à l'écriture à une distance x de l'entrefer.
Ho = champ maximal théorique à l'écriture
$= ni/e$
i= courant dans le circuit 3

n= nombre de tours du circuit 3
e= épaisseur de l'entrefer.
- le bruit intrinsèque de la tête (bruit thermique) est proportionnel à la partie réelle de l'impédance
$R = R_B + R_L$
avec $R_B$ = résistance du bobinage
$= \rho l/s$

$$R_L = L \times \frac{\mu'' e}{\mu' e}$$

avec $\rho$ = résistivité du fil du circuit 3
l = longueur du fil proportionnelle au nombre de tours du circuit 3
s = section du fil
L = inductance de la tête proportionnelle à n2
$\mu'' e$ = partie imaginaire de la perméabilité efficace du circuit magnétique
$\mu'_e$ = partie réelle de la perméabilité efficace du circuit magnétique.

L'objet de l'invention est donc de fournir des moyens permettant d'augmenter le rapport signal/bruit d'une tête magnétique.

L'invention est applicable aux différents types de têtes et elle concerne particulièrement :
- les têtes massives pour enregistrement longitudinal ou éventuellement perpendiculaire.
- les têtes couches minces pour enregistrement longitudinal ou éventuellement perpendiculaire.
- les têtes à pôle principal ou unique pour enregistrement perpendiculaire.

L'invention concerne donc une tête magnétique d'enregistrement/lecture comportant un circuit magnétique terminé par deux pôles magnétiques séparés par un entrefer l'ensemble des pôles magnétiques et de l'entrefer étant disposé à proximité d'une surface d'enregistrement d'un support d'enregistrement magnétique caractérisé en ce que l'entrefer comporte au moins une couche d'un matériau supraconducteur disposée sensiblement perpendiculairement à la surface d'enregistrement du support d'enregistrement .

L'invention concerne également une tête magnétique d'enregistrement/lecture en couches minces caractérisé en ce qu'il comprend un circuit inducteur (3) de champ magnétique réalisé en couche mince à l'aide d'un matériau supraconducteur.

L'invention concerne également une tête magnétique d'enregistrement/lecture à pôle unique comprenant un pôle unique muni d'un enroulement d'induction de champ magnétique et possédant une extrémité d'émission de champ magnétique comportant une face d'émission disposée à proximité d'une surface d'enregistrement d'un support d'enregistrement magnétique de façon à émettre un champ magnétique perpendiculairement à la surface d'enregistrement caractérisé en ce qu'elle comporte au moins une gaine en matériau supraconducteur englobant l'extrémité d'émission excepté la face d'émission.

Enfin l'invention concerne un procédé de réalisation d'une tête d'enregistrement/lecture, caractérisé en ce qu'il comporte les étapes suivantes :

- a) réalisation sur une partie de la couche, d'une couche en matériau magnétique ;
- b) réalisation sur la partie restante de la couche, d'une couche d'isolant ;
- c) réalisation sur le matériau magnétique et l'isolant d'une couche d'isolant présentant en son centre une partie ne comportant pas d'isolant et laissant libre le matériau magnétique ;
- d) réalisation sur la couche d'isolant d'un bobinage en matériau supraconducteur et sur le matériau magnétique d'un entrefer également en matériau supraconducteur ;
- e) réalisation au dessus du bobinage d'une couche d'isolant laissant libre ladite partie du matériau magnétique;
- f) réalisation d'une couche d'un matériau magnétique recouvrant ladite partie de matériau magnétique, ainsi que l'entrefer ;
- g) réalisation d'une couche d'un matériau supraconducteur sur l'ensemble de la tête.

Les différents objets et caractéristiques de l'invention apparaîtront plus clairement dans la description qui va suivre faite à titre d'exemple en se reportant aux figures annexées qui représentent :

- La figure 1, une tête magnétique massive connue dans la technique ;
- la figure 2, une tête magnétique en couches minces connue dans la technique ;
- la figure 3, une tête magnétique massive selon l'invention ;
- la figure 4, une tête magnétique en couches minces selon l'invention ;
- les figures 5 et 6, une tête magnétique planaire selon l'invention ;
- les figures 7 et 8, une tête magnétique à pôle unique ;
- la figure 9, une tête magnétique à pôle unique selon l'invention ;
- la figure 10, une variante de réalisation de la tête magnétique de la figure 9.
- la figure 11, un exemple de réalisation d'une partie de circuit magnétique selon l'invention.

Une tête magnétique massive connue dans la technique, telle que représentée en figure 1 présente une bonne efficacité à l'écriture parce que la section du circuit magnétique peut être facilement réduite au niveau de l'entrefer de manière à concentrer le flux. En revanche elles présentent à la lecture un rapport signal/bruit qui n'est pas optimisé pour la raison suivante :

Dans le cas d'une tête massive la quantité $R_L$ est prépondérante parce que l'inductance L est proportionnelle entre autres à la section S du circuit magnétique au niveau de l'entrefer 9 en raison du flux magnétique qui traverse cet entrefer constitué d'un matériau dont la perméabilité est typiquement égale à 1.

La section S est déterminée par la largeur L de la tête (qui détermine la largeur de la piste enregistrée) et la profondeur de l'entrefer l qui est fixée par des conditions d'usinage et d'usure de la tête :

S = L x l

Par exemple, une tête vidéo VHS aura pour caractéristiques :
- e = 0,3 micromètres
- L = 40 micromètres
- l = 20 micromètres
- S = 800 micromètres carrés

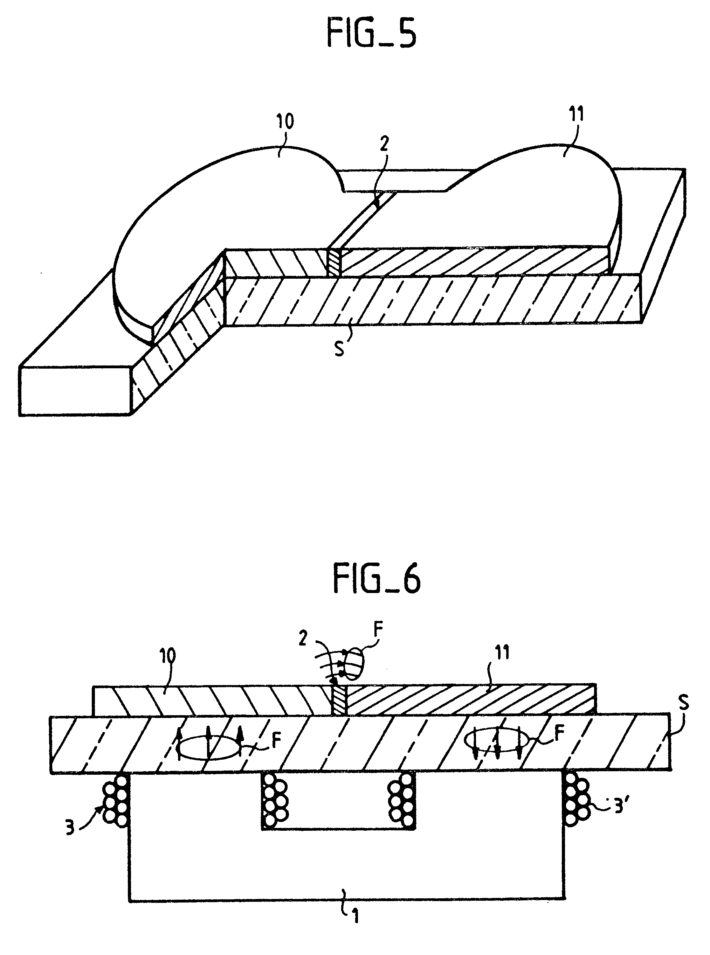

L'invention permet de résoudre ce problème en prévoyant dans l'entrefer 2, comme représenté en figure 3, un matériau supraconducteur. En effet les matériaux classiques présentent une perméabilité très voisine de 1 ce qui autorise le passage du champ à travers l'entrefer.

Par contre les matériaux supraconducteurs présentent une perméabilité nulle ce qui interdit tout passage du champ à travers l'entrefer. Le champ ne peut donc se reformer que hors de l'entrefer, ce qui permet d'améliorer le rapport signal/bruit des têtes massives en réduisant l'inductance (donc le bruit de la tête).

En effet,dans le cas d'une tête massive avec un entrefer non supraconducteur, le bruit est proportionnel à l'inductance qui est elle-même proportionnelle à la section du circuit magnétique au niveau de l'entrefer soit S = L x l

Lorsque l'entrefer est constitué d'un matériau supraconducteur, le champ ne peut se refermer que hors de l'entrefer et l'inductance est alors due, uniquement aux champs de fuite ce qui correspond en première approximation à une section efficace S' de l'ordre de L x e. Le bruit est donc diminué d'un facteur S/S' = l/e soit environ 66 dans le cas de la tête vidéo prise en exemple.

En outre, il convient de noter que l'utilisation d'un entrefer supraconducteur ne peut qu'améliorer l'efficacité en raison d'une configuration plus favorable des lignes de champ. Ce gain qui est typiquement d'un facteur deux permet en particulier d'enregistrer sur des matériaux à champ coercitif deux fois plus élevé pour un matériau donné constituant le circuit magnétique 1.

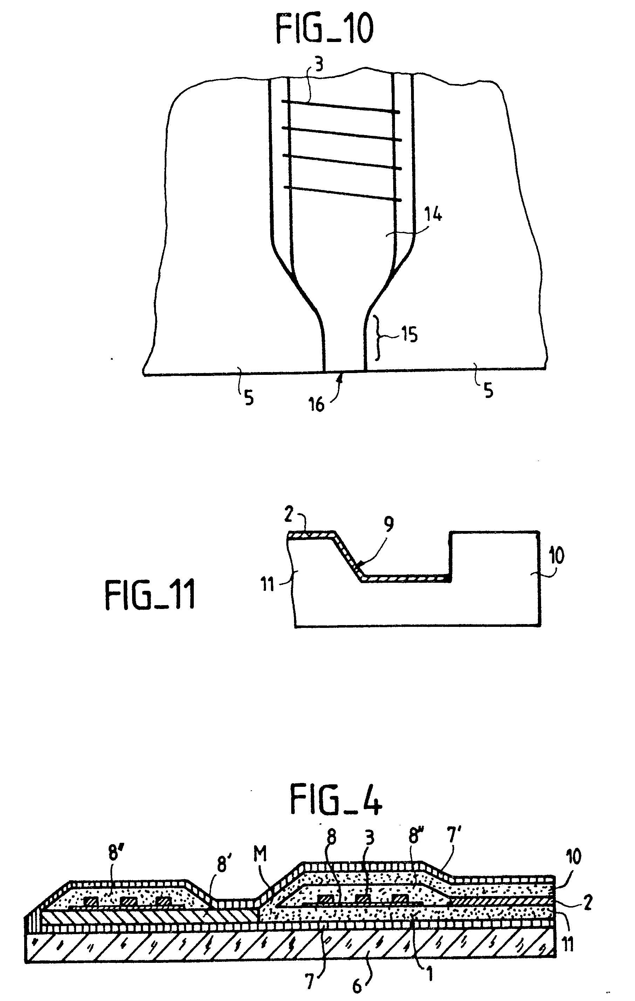

Dans certaine technique de réalisation, le circuit magnétique est réalisé en deux parties et pour obtenir un circuit magnétique de tête magnétique on accole deux parties de circuits magnétique. La figure 11 représenté, à titre d'exemple, une partie (10) de circuit magnétique. Selon une variante de réalisation de l'invention, avant de coller l'une à l'autre deux parties de circuit magnétique, on recouvre l'intérieur d'au moins une partie de circuit magnétique d'une couche d'un matériau supraconducteur 9 et notamment la zone devant servir d'entrefer 2.

A titre indicatif l'épaisseur d'une telle couche pourra être de l'ordre de quelques centaines d'Angstroems de façon à être supérieure à la profondeur de pénétration du champ magnétique.

On va maintenant décrire la conception d'une tête magnétique en couches minces selon l'invention du type représenté en figure 2.

Les têtes en couches minces présentent des sections S beaucoup plus réduites pour deux raisons : la technique de fabrication permet de réduire la profondeur d'entrefer I et ce type de tête fonctionnant par principe sans contact avec le support d'enregistrement ne doit pas subir d'usure et ne nécessite donc pas de profondeur d'entrefer I.

Par exemple, une tête pour disque dur aura pour caractéristiques :

e = 0,5 micromètre

L = 40 micromètres

I = 2 micromètres

S = 80 micromètres carrés

Ces têtes présentent donc l'avantage en principe d'avoir des rapports signal/bruit supérieurs (d'un facteur 10 dans l'hypothèse où le signal est le même)

Toutefois ces têtes présentent trois inconvénients :
- elles ne peuvent pas fonctionner en contact avec le support d'enregistrement, car la faible valeur de la profondeur d'entrefer I interdit toute usure pour éviter toute diminution du signal
- l'usinage de la tête pour amener I à une valeur de quelques micromètres est très délicat et conduit à des rendements de production très médiocres
- lorsque I est maintenu à une valeur trop élevée (supérieure à l'épaisseur de la couche magnétique) le champ a tendance à se refermer dans l'entrefer et le champ de fuite hors de l'entrefer qui sert à l'enregistrement est très atténué et tend rapidement vers zéro. La tête ne peut alors écrire que sur des milieux à champ coercitif faible (donc peu performants). En outre, en vertu du principe de réciprocité, l'efficacité à la lecture est diminuée dans le même rapport, ce qui dégrade le rapport signal/bruit.

Tous ces inconvénients sont liés au fait que dans les têtes connues, le champ peut se refermer à travers l'entrefer 2 en raison de la perméabilité proche de l'unité des matériaux habituellement utilisés pour réaliser cet entrefer.

En prévoyant selon l'invention un matériau à perméabilité nulle, dans l'entrefer, la fermeture des champs dans l'entrefer est interdite et cela permet donc de fabriquer des têtes couches minces avec une profondeur d'entrefer I plus important tout en conservant une efficacité élevée. Ceci rend donc l'usinage des têtes beaucoup plus simple et permet d'utiliser ces têtes en contact avec le milieu d'enregistrement puisque la profondeur 1 autorise alors une certaine usure. Par conséquent les rendements de production et le temps de vie des têtes est nettement amélioré.

Il convient de noter qu'un gain d'un facteur deux en efficacité est obtenu comme dans le cas des têtes massives.

Par ailleurs, la résistance R est due principalement dans ce cas à la résistance $R_B$ du bobinage qui peut être annulée si le bobinage est lui-même réalisé en matériau supraconducteur. L'association selon l'invention d'un entrefer 2 et d'un bobinage 3 tous deux en matériau supraconducteur permet donc à la fois d'augmenter le signal et de diminuer le bruit ; elle peut donc être particulièrement intéressante dans le cas d'une tête dont le bobinage comporte une seule spire. En effet, bobinage et entrefer peuvent alors être réalisés comme cela est représenté en figure 4, par le même motif de matériau supraconducteur ce qui simplifie considérablement la réalisation de la tête.

Ce genre de tête réalisée à partir de matériaux non supraconducteurs présente un rapport signal/bruit très médiocre, alors qu'une telle tête, selon l'invention contenant un entrefer et un bobinage en matériau supraconducteur peut présenter un rapport signal/bruit satisfaisant surtout si elle est associée à un transformateur (fixe ou tournant) lui-même supraconducteur, ramenant le signal à un niveau suffisamment supérieur au bruit de l'amplificateur d'entrée.

La figure 4, représente une telle tête magnétique en couches minces selon l'invention.

Un substrat isolant 6 est recouvert d'une couche en matériau supraconducteur 7. Une partie de cette couche 7 est recouverte par une couche d'un matériau magnétique (1) jusqu'au bord de la face active 25 de la tête. L'autre partie de la couche 7 est recouverte par du matériau isolant 8'.

Sur le matériau magnétique 1 et le matériau isolant 8' se trouve le bobinage planaire 3 réalisé en matériau supraconducteur et isolé des couches précédentes par un matériau isolant 8. L'isolation de ce bobinage est complété, au dessus, par un matériau isolant 8''.

Sur la couche de matériau magnétique 1 est réalisé l'entrefer 2 à l'aide d'un matériau supraconducteur.

Le circuit magnétique 1 est complété par du matériau magnétique qui recouvre isolant 8'' et l'entrefer 2. L'ensemble est lui-même recouvert par du matériau supraconducteur 7'.

On a ainsi une tête magnétique dont le circuit magnétique 1 passe à l'intérieur du bobinage 3 et possède deux pôles 10 et 11 encadrant un entrefer 2.

Le procédé de réalisation d'une telle tête magnétique comportera les étapes suivantes :

- a) réalisation d'une couche 7 d'un matériau supraconducteur sur un substrat 6 ;

- b) réalisation sur une partie de la couche 7 d'une couche en matériau magnétique (1) ;

- c) réalisation sur la partie restante de la couche 7 d'une couche d'isolant 8' ;

- d) réalisation sur le matériau magnétique (1) et l'isolant 8' d'une couche d'isolant 8 présentant en son centre une partie M ne comportant pas d'isolant et laissant libre le matériau magnétique ;

- e) réalisation sur la couche d'isolant 8 d'un bobinage 3 en matériau supraconducteur et sur le matériau magnétique (1) d'un entrefer 2 en matériau supraconducteur ;

- f) réalisation au dessus du bobinage 3 d'une couche d'isolant 8'' laissant libre la partie M du matériau magnétique ;

- g) réalisation d'une couche d'un matériau magnétique recouvrant la partie M de matériau magnétique 1, ainsi que l'entrefer 2 ;

- h) réalisation d'une couche 7' d'un matériau supraconducteur sur l'ensemble de la tête.

Les différentes étapes précédentes sont réalisées par des procédés de dépôts et de gravures connus.

Selon une variante de réalisation les couches 7 et 7' de matériau magnétique peuvent ne pas être réalisées.

Les figures 5 et 6 représentent une tête planaire selon l'invention. Cette tête comporte, sur un substrat S, deux pôles magnétiques en couches minces 10 et 11 séparés par un entrefer 2.

Un circuit magnétique 1 portant des bobinages d'induction de champ magnétique 3 et 3' est situé de l'autre coté des pôles 10 et 11 par rapport au substrat et en vis à vis de ces pôles. Un flux F émis par les bobinages traverse le substrat S et se referme par les pôles 10 et 11.

Comme dans les exemples de réalisation précédents, l'entrefer 2 comporte un matériau supraconducteur imposant comme cela est représenté sur la figure 6 que la totalité du flux magnétique F créé par les bobines 3 et 3' passe d'un pôle 10 à l'autre pôle 11 sans traverser l'entrefer 2.

On va maintenant décrire l'application de l'invention à une tête magnétique pour enregistrement perpendiculaire.

Cette application découle de la même idée inventive que celle des exemples de réalisation de l'invention décrits précédemment par le fait qu'il s'agit toujours de canaliser le flux magnétique émis par la tête vers le support d'enregistrement.

Le caractérisée longitudinal ou perpendiculaire d'un enregistrement magnétique est plus déterminé par les propriétés du milieu d'enregistrement que par la tête elle-même. Aussi le type de tête représentée sur la figure 3 peut être utilisé dans les deux cas.

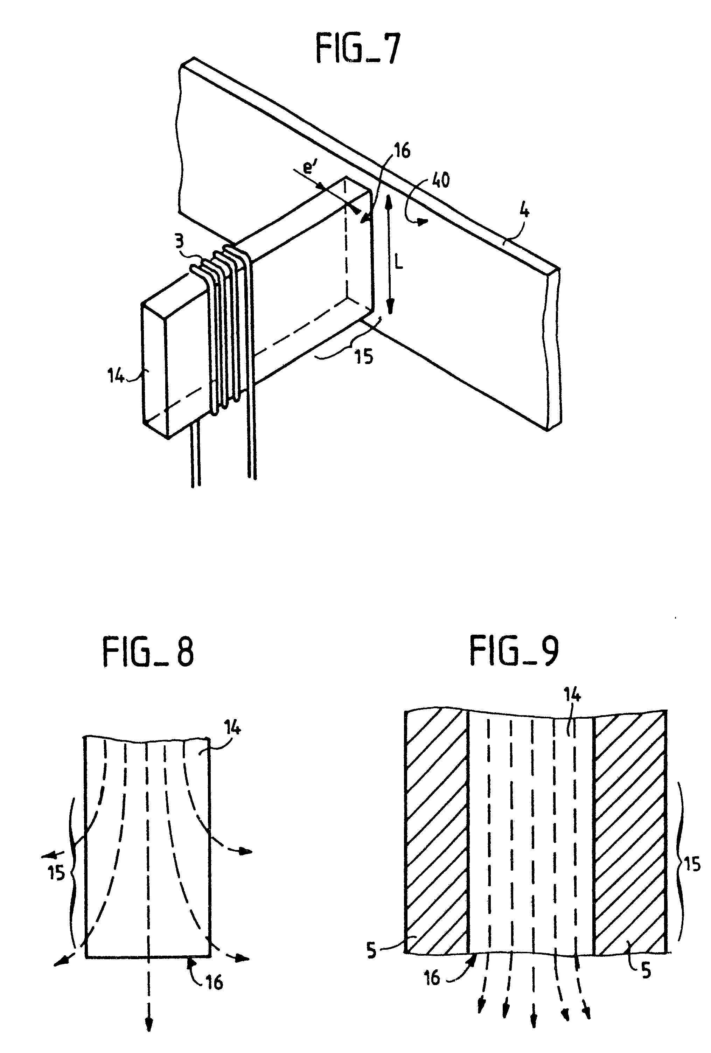

Dans certains cas il est toutefois souhaitable de disposer de têtes plus spécifiquement adaptés à l'enregistement perpendiculaire c'est à dire des têtes dans lesquelles la composante du champ magnétique perpendiculaire à la surface du support d'enregistrement est prépondérante par rapport à la composante longitudinale. Le principe de base utilisé à cette fin est de ne conserver qu'un seul pôle du circuit magnétique 1 dans la zone active de la tête, le reste du circuit pouvant se refermer sur le milieu d'enregistrement par un pôle dit auxiliaire ou pouvant être considéré comme se refermant à l'infini. Une telle tête d'enregistrement à pôle unique est représentée en figure 7.

Dans ce type de tête, la résolution spatiale, c'est à dire la longueur d'onde minimale qui peut être lue par la tête, n'est plus déterminée par l'épaisseur de l'entrefer e mais par l'épaisseur du pôle principal. En théorie une résolution de l'ordre de 2e' est envisageable, mais cette limite ne peut être atteinte que pour une configuration idéale des lignes de champ qui ne peut être réalisée avec les matériaux courants parce que les lignes de champ magnétique , représentées en pointillés sur la figure 8, sortent du pôle avant la face 16 de l'extrémité.

Ce phénomène provient du fait que le milieu qui entoure le pôle présente, une perméabilité proche de l'unité.

Selon l'invention pour remédier à cet inconvénient on prévoit des moyens pour confiner le champ à l'intérieur du pôle en l'entourant d'un matériau supraconducteur 5 dont la perméabilité est nulle.

La figure 9 représente un exemple de réalisation d'une telle tête magnétique . Le pôle 14 est enveloppé sur ces différentes faces, sauf la face 16 d'extrémité par un matériau de perméabilité nulle et plus particulièrement par un matériau supraconducteur 5. Ainsi, le champ magnétique est confiné dans le pôle magnétique 14. Il n'y a pas de champ de fuite par les parois latérales du pôle. La totalité du champ sort du pôle 14 par la face d'extrémité 16 comme cela est représenté en pointillés sur la figure 9.

L'efficacité d'une telle tête peut être amélioré en jouant sur la forme des éléments 1 et 5 pour concentrer le flux au niveau de la zone active.

Ainsi sur l'exemple de réalisation représenté en figure 10, le pôle magnétique 14 comporte, à son extrémité 15, un rétrécissement permettant de concentrer le flux magnétique. Le matériau supraconducteur 5 épouse la forme de ce rétrécissement.

De plus, le matériau supraconducteur, selon cet exemple de réalisation enrobe la tête, c'est-à-dire le circuit magnétique 14 et le bobinage 3, excepté la face d'extrémité 16.

Le circuit magnétique 14 peut également être refermé à l'aide d'un pôle auxiliaire sur le milieu d'enregistrement pourvu d'une sous-couche à forte perméabilité. Le pôle auxiliaire sera également pourvu d'une gaine en matériau supraconducteur canalisant le champ magnétique.

Il convient de noter que l'amélioration des performances envisagées ne peut être obtenue que sous deux conditions :
- la profondeur de pénétration du champ magnétique dans le matériau supraconducteurest suffisamment faible,
- le champ critique du matériau supraconducteur est suffisamment élevé.

Il est bien évident que la description qui précède n'a été faite qu'à titre d'exemple non limitatif. D'autres variantes peuvent être envisagées sans sortir du cadre de l'invention. Les exemples numériques n'ont été fournis que pour illustrer la description.

## Revendications

1 - Tête magnétique d'enregistrement/lecture comportant un circuit magnétique (1) terminé par deux pôles magnétiques (10 et 11) séparés par un entrefer (2) l'ensemble des pôles magnétiques (10,11) et de l'entrefer (2) étant disposé à proximité d'une surface d'enregistrement (40) d'un support d'enregistrement magnétique (4) caractérisée en ce que l'entrefer (2) comporte au moins une couche d'un matériau supraconducteurdisposée sensiblement perpendiculairement à la surface d'enregistrement (40) du support d'enregistrement 4.

2 - Tête magnétique d'enregistrement/lecture selon la revendication 1, caractérisée en ce que

que l'entrefer (2) est constitué d'un seul matériau supraconducteur.

3 - Tête magnétique d'enregistrement/lecture en couches minces selon la revendication 1, caractérisé en ce qu'il comprend un circuit inducteur (3) de champ magnétique réalisé en couche mince à l'aide d'un matériau supraconducteur.

4 - Tête magnétique d'enregistrement/lecture selon la revendication 3, caractérisée en ce que le circuit inducteur de champ magnétique (3) est un matériau supraconducteur identique à celui qui comporte l'entrefer (2).

5 - Tête magnétique d'enregistrement/lecture à pôle unique comprenant un pôle unique (14) muni d'un enroulement d'induction de champ magnétique (3) et possédant une extrêmité d'émission de champ magnétique (15) comportant une face d'émission (16) disposée à proximité d'une surface d'enregistrement (40) d'un support d'enregistrement magnétique (4) de façon à émettre un champ magnétique perpendiculairement à la surface d'enregistrement (40), caractérisée en ce qu'elle comporte au moins une gaine en matériau supraconducteur (5) englobant l'extrêmité d'émission (15) excepté la face d'émission (16).

6 - Tête magnétique d'enregistrement/lecture selon la revendication 5, caractérisée en ce que la gaine de matériau supraconducteur (5) englobe le circuit magnétique (13) et l'enroulement d'induction de champ magnétique (3) excepté la face d'émission (16).

7 - Tête magnétique d'enregistrement/lecture selon la revendication 6, caractérisée en ce que la gaine de matériau supraconducteur (5) est une couche enveloppant le circuit magnétique (13) et l'enroulement (16).

8 - Tête magnétique d'enregistrement/lecture selon la revendication 5, caractérisée en ce que l'extrémité d'émission de champ magnétique (15) possède un rétrécissement et que la gaine de matériau supraconducteur (5) épouse la forme de ce rétrécissement.

9 - Procédé de réalisation d'une tête d'enregistrement, lecture selon la revendication 4, caractérisé en ce qu'il comporte les étapes suivantes :

    - a) réalisation sur une partie de la couche (7) d'une couche en matériau magnétique (1) ;

    - b) réalisation sur la partie restante de la couche 7 d'une couche d'isolant (8') ;

    - c) réalisation sur le matériau magnétique (1) et l'isolant (8') d'une couche d'isolant (8) présentant en son centre une partie (M) ne comportant pas d'isolant et laissant libre le matériau magnétique ;

    - d) réalisation sur la couche d'isolant (8) d'un bobinage (3) en matériau supraconducteur et sur le matériau magnétique (1) d'un entrefer (2) également en matériau supraconducteur ;

    - e) réalisation au dessus du bobinage (3) d'une couche d'isolant (8") laissant libre ladite partie (M) du matériau magnétique ;

    - f) réalisation d'une couche d'un matériau magnétique recouvrant ladite partie (M) de matériau magnétique (1), ainsi que l'entrefer (2) ;

    - g) réalisation d'une couche (7') d'un matériau supraconducteur sur l'ensemble de la tête.

10. Procédé selon la revendication 9, caractérisé en ce que la première étape du procédé est précédée d'une phase de dépôt d'une couche (7) d'un matériau supraconducteur.

11. Procédé selon la revendication 9, caractérisé en ce que la dernière étape du procédé est suivie d'une phase de dépôt d'une couche (7') d'un matériau supraconducteur.

# FIG_1

# FIG_3

# FIG_2

EP 0 314 557 A2

# FIG_5

# FIG_6

# FIG_7

# FIG_8

# FIG_9

FIG_10

FIG_11

FIG_4